# EUROPÄISCHE PATENTSCHRIFT

(11) **EP 3 257 411 B1**
(45) Veröffentlichungstag und Bekanntmachung des Hinweises auf die Patenterteilung: **14.04.2021**
(21) Anmeldenummer: 17175057.3
(22) Anmeldetag: 08.06.2017
(51) Int. Cl.: A47J 43/044

(54) **VERSTELLEINRICHTUNG FÜR EIN HAUSHALTSKLEINGERÄT MIT ELEKTROMOTOR**
ADJUSTING DEVICE FOR A SMALL HOUSEHOLD APPLIANCE WITH ELECTRIC MOTOR
DISPOSITIF DE RÉGLAGE POUR UN PETIT APPAREIL MÉNAGER COMPRENANT UN MOTEUR ÉLECTRIQUE

(30) Priorität: 14.06.2016 DE 102016210472
(43) Veröffentlichungstag der Anmeldung: 20.12.2017
(73) Patentinhaber: BSH Hausgeräte GmbH, 81739 München (DE)
(72) Erfinder: Pesec, Jurij, 3301 Petrovce (SI); Golavsek, Samo, 3312 Prebold (SI); Zlaus, Uros, 3201 Smartno v Rozni dolini (SI)

(56) Entgegenhaltungen:
- DE-A1- 1 454 164
- US-A- 2 744 734

## Beschreibung

Haushaltskleingeräte mit einem Elektromotor, beispielsweise Küchenhandgeräte oder sonstige tragbare Küchengeräte, insbesondere Rührgeräte, Standmixer, Mikrowellengeräte, Elektromesser, Saftpressen oder dergleichen mit einem Gewicht von vorzugsweise maximal 15 kg weisen häufig mindestens eine Verstelleinrichtung auf, die ein um eine Achse verschwenkbares Bedienelement umfasst. Mittels einer Verschwenkung (bzw. einer Drehung) kann ein Bediener solch einer Verstelleinrichtung üblicherweise mindestens einen Betriebsparameter des Geräts verändern, beispielsweise eine Umdrehungszahl eines rotierenden Elements. Das Bedienelement kann beispielsweise als Drehknopf ausgebildet sein oder als ein Hebel, die dann jeweils um eine Achse verschwenkbar gelagert sind.

Damit der Einstellungsvorgang besser kontrolliert werden kann, ermöglichen viele Verstelleinrichtungen lediglich ein stufenweises Verstellen. Dazu kann ein Rastmechanismus vorgesehen sein, der ein kontinuierliches Verschwenken verhindert und der zudem das Bedienelement in der jeweiligen Lage hält, solange nicht eine für ein Verschwenken aufgebrachte Kraft einer gewissen Mindeststärke die Verrastung löst.

Solche Verstelleinrichtungen sind beispielsweise aus der DE 14 54 164 A1 und der US 2 744 734 A bekannt.

Derartige Verstelleinrichtungen haben den Nachteil, dass die notwendige Mindeststärke für das Lösen der Verrastung (beim Verschwenken des Bedienelements) relativ niedrig sein muss, um ein angemessen einfaches Verstellen des Bedienelements zu ermöglichen, dass dadurch aber ein Bediener nur unzureichende Rückmeldung über das Ausmaß der durch ihn vorgenommenen Verstellung erhält und er diese daher schlecht kontrollieren kann. Dadurch können vom Bediener versehentlich ungeeignete Einstellungen vorgenommen werden.

Die vorliegende Erfindung hat die Aufgabe, eine Technik bereitzustellen, die eine einfache und präzise Kontrollfunktionalität für eine Einstellung mindestens eines Betriebsparameters eines Haushaltskleingeräts mit Elektromotor ermöglicht. Die vorliegende Erfindung hat weiterhin die Aufgabe, ein Haushaltskleingerät, das einen Elektromotor aufweist, mit einer präzise kontrollierbaren Einstellungsmöglichkeit eines Betriebsparameters bereitzustellen.

Die Aufgabe wird gelöst durch eine Verstelleinrichtung gemäß Anspruch 1 und ein Haushaltskleingerät gemäß Anspruch 8. Vorteilhafte Ausführungsformen sind in den Unteransprüchen, der Beschreibung und den Figuren offenbart.

Eine erfindungsgemäße Verstelleinrichtung für ein Haushaltskleingerät mit Elektromotor umfasst ein Bedienelement, das zur Einstellung je einer von mindestens zwei einstellbaren Schwenkstellungen verschwenkbar gelagert ist, also in einem Winkelbereich um eine Achse verschwenkt werden kann.

Die Verstelleinrichtung weist einen Rastmechanismus zum lösbaren Halten des Bedienelements in einer jeweiligen Schwenkstellung auf; solange nicht eine für ein Verschwenken aufgebrachte Kraft einer gewissen Mindeststärke aufgebracht wird, hält der Rastmechanismus also das Bedienelement in seiner jeweils aktuellen Lage. Das Bedienelement einer erfindungsgemäßen Verstelleinrichtung weist zudem eine Zahnreihe auf, die eine Mehrzahl an in Verschwenkrichtung (bezüglich der Achse also in Umlaufrichtung) des Bedienelements hintereinander angeordneten Zähnen umfasst. Die Zahnreihe dient dazu bzw. ist dazu eingerichtet, mit einem Eingriffselement zusammenzuwirken, wenn ein solches Eingriffselement ortsfest gegenüber dem Bedienelement (z.B. am Haushaltskleingerät, insbesondere an einer Komponente der Verstelleinrichtung) angeordnet bzw. befestigt ist und in die Zahnreihe eingreift.

Eine derartige Eignung der Zahnreihe kann beispielsweise durch eine entsprechende Form und/oder Anordnung der Zähne realisiert werden. Die Zähne können z.B. - bezogen auf die (Schwenk-) Achse des Bedienelements - in radialer Richtung und/oder in axialer Richtung jeweils einen Vorsprung des Bedienelements ausbilden. Sie sind vorzugsweise im Wesentlichen gleich geformt. Sie können beispielsweise jeweils im Wesentlichen zackenartig (z.B. mit einem dreieckigen oder trapezförmigen Querschnitt) oder wellenartig ausgebildet sein. Jeder Zahn weist vorzugsweise zwei Flanken auf, zwischen denen eine (ggf. gerundete) Zahnspitze liegt. Zwischen benachbarten Flanken benachbarter Zähne der Zahnreihe ist vorzugsweise jeweils ein Zahnzwischenraum ausgebildet. Gemäß einer exemplarischen Ausführungsform beträgt ein Winkel zwischen derartigen benachbarten Flanken benachbarter Zähne der Zahnreihe mindestens 50°, bevorzugter mindestens 55° und/oder höchstens 75°, bevorzugter höchstens 65°.

Eine erfindungsgemäße Verstelleinrichtung bietet den Vorteil, dass sie in einfacher, vorteilhafter Weise dahingehend aufgebessert bzw. so montiert werden kann, dass sie eine präzise Kontrollfunktionalität für eine Einstellung der jeweiligen Verschwenkstellung bietet: Dazu kann das Eingriffselement als zusätzliches Element so an einer Komponente der Verstelleinrichtung befestigt werden oder sein, dass es in einen Zahnzwischenraum der Zahnreihe eingreift. Wird dann das Bedienelement verschwenkt, so dass sich der Zahnzwischenraum der Zahnreihe ändert, in den das Eingriffselement eingreift, so wird dadurch jeweils ein Geräusch erzeugt, das einem Bediener eine präzise akustische Rückmeldung über das Ausmaß der Verschwenkung ermöglicht. Dadurch kann die Genauigkeit der Einstellung kontrolliert werden, was dem Bediener ein planvolles Regeln der Einstellung ermöglicht. Insbesondere kann so die Sicherheit bei der Verwendung des Haushaltskleingeräts erhöht werden.

Ein erfindungsgemäßes Haushaltskleingerät mit Elektromotor umfasst eine erfindungsgemäße Verstelleinrichtung gemäß einer der in dieser Schrift offenbarten Ausführungsformen. Es kann beispielsweise ein Küchenkleingerät, insbesondere eine Küchenmaschine, ein Rührgerät, ein Elektromesser, eine Saftpresse, ein Pürierstab, ein Standmixer oder dergleichen sein. Vorzugsweise weist das Haushaltskleingerät einen Mechanismus auf, über den vermöge einer jeweiligen Schwenkstellung des Bedienelements einer von mehreren möglichen Betriebsparametern (z.B. des Elektromotors und/oder einer mechanischen Komponente (wie beispielsweise ein Abstand oder ein Winkel zwischen zwei Elementen des Haushaltskleingeräts)) eingestellt werden kann.

Der Rastmechanismus kann beispielsweise durch ein Zusammenwirken zweier ineinander eingreifender Rastelemente realisiert werden, von denen eines am Bedienelement angeordnet und eines fix im oder am Haushaltskleingerät (z.B. an einem Gehäuse desselben) angeordnet ist. Insbesondere kann ein erstes der Rastelemente ein Rastprofil (insbesondere ein Spitzen- oder Wellenprofil) umfassen und ein zweites Rastelement einen Steg, der dazu eingerichtet ist, in eine Rastkerbe (z.B. einen Spitzen- bzw. Wellenzwischenraum) des Rastprofils einzugreifen, wobei die jeweilige Rastkerbe durch eine Verschwenkung des Bedienelements geändert werden kann.

Gemäß einer vorteilhaften Ausführungsform umfasst eine erfindungsgemäße Verstelleinrichtung mindestens ein Gehäuse- und/oder Rahmenelement des Haushaltskleingeräts. Vorzugsweise ist eine Lagerung des Bedienelements und/oder mindestens ein fixes Rastelement des Rastmechanismus' (z.B. ein Steg oder ein Rastprofil, insbesondere ein Spitzen- oder Wellenprofil) an einem derartigen Element angeformt oder befestigt.

Das Bedienelement kann z.B. als ein verschwenkbarer Hebel oder als ein Drehknopf ausgebildet sein, wobei jeweils die jeweilige (Schwenk-) Achse im Wesentlichen senkrecht zu einer Oberfläche eines Gehäuseelements des Haushaltskleingeräts verlaufen kann, oder das Bedienelement kann beispielsweise eine als drehbare Rolle ausgebildete Grundform aufweisen, deren Achse im Wesentlichen parallel zu einer Oberflächetangente eines Gehäuseelements des Haushaltskleingeräts verläuft (und an dem - wie erwähnt - eine Lagerung des Bedienelements und/oder eine Komponente des Rastmechanismus angeformt oder befestigt sein kann/können).

Das Verschwenken des Bedienelements ist vorzugsweise in einem Winkelbereich in zwei Drehrichtungen (also vor und zurück) möglich; alternativ kann das Bedienelement in genau eine Richtung unbegrenzt (um einen beliebig großen Winkel, insbesondere 360°) verschwenkbar sein.

Gemäß einer vorteilhaften Ausführungsform der vorliegenden Erfindung ist das Bedienelement dazu eingerichtet, ein Gehäuse des Haushaltskleingeräts zu durchstoßen und so einen für einen Verwender zugänglichen Bereich und einen durch das Gehäuse verdeckten Bereich aufzuweisen; umfasst die Verstelleinrichtung mindestens ein Gehäuseelement, kann das Bedienelement dementsprechend so angeordnet sein, dass es diese(s) Gehäuseelement(e) durchstößt. Bei einem erfindungsgemäßen Haushaltskleingerät durchstößt analog das Bedienelement vorzugsweise mindestens ein Gehäuseelement des Haushaltskleingeräts.

Vorteilhafterweise ist der Rastmechanismus und/oder die Zahnreihe des Bedienelements und/oder eine Lagerung des Bedienelements dazu eingerichtet, innerhalb eines Gehäuses des Haushaltskleingeräts (insbesondere in einem durch das Gehäuse verdeckten Bereich) angeordnet zu sein; bei einem erfindungsgemäßen Haushaltskleingerät ist der Rastmechanismus und/oder die Zahnreihe und/oder eine Lagerung des Bedienelements analog vorzugsweise innerhalb eines Gehäuses (insbesondere in einem durch das Gehäuse verdeckten Bereich) des Haushaltskleingeräts angeordnet. Auf diese Weise ist der Rastmechanismus bzw. die Zahnreihe bzw. die Lagerung insbesondere gegen mechanische Einflüsse und Verschmutzung geschützt.

Erfindungsgemäß umfasst die Verstelleinrichtung mindestens ein Befestigungsmittel zum Haltern des Eingriffselements. Das Befestigungsmittel ist dabei also dazu eingerichtet, mit dem Eingriffselement bestückt zu werden und in einem derart bestückten Zustand das Eingriffselement lösbar ortsfest so zu haltern, dass das Eingriffselement mit dem Zahnreihe zusammenwirkt, dass beispielsweise ein Abschnitt des Eingriffselements in einen Zahnzwischenraum der Zahnreihe eingreift. In einem unbestückten Zustand des Befestigungselements, in dem also kein Eingriffselement von diesem gehaltert wird, läuft die Zahnreihe hingegen vorzugsweise frei, hat also keinen Kontakt zu einer anderen Komponente der Verstelleinrichtung bzw. des Haushaltskleingeräts.

Eine derartige Ausführungsform ermöglicht ein einfaches, optionales Aufbessern der Verstelleinrichtung bzw. des Haushaltskleingeräts durch Befestigen des Eingriffselements mit dem Befestigungselement, wenn eine verbesserte Kontrollmöglichkeit für ein Verschwenken geboten werden soll. Zudem erlaubt die Ausführungsvariante ein besonders einfaches Auswechseln des Eingriffselements, beispielsweise wenn es als Verschleißteil beschädigt ist.

Ein solches Befestigungselement ist vorzugsweise in seiner Größe und/oder Form an das Eingriffselement angepasst, das zu haltern es vorgesehen bzw. eingerichtet ist. Insbesondere kann das Befestigungselement dazu eingerichtet sein, das Eingriffselement form- und/oder kraftschlüssig zu haltern.

Das Befestigungselement kann beispielsweise mindestens einen Aufnahmerahmen zumindest für einen Abschnitt des Eingriffselements, mindestens eine Halteschiene, mindestens eine Klemmvorrichtung und/oder mindestens ein Schraubelement umfassen.

Gemäß einer vorteilhaften Ausführungsform umfasst die Verstelleinrichtung das Eingriffselement, das vorzugsweise ortsfest an der Verstelleinrichtung angeordnet oder anzuordnen sowie dazu eingerichtet ist, in die Zahnreihe des Bedienelements verstellbar einzugreifen. Das Eingriffselement kann mit einer Komponente des Haushaltskleingeräts, beispielsweise mit einem Rahmen- oder Gehäuseelement des Haushaltskleingerät fest (insbesondere stoffschlüssig) verbunden (z.B. angeschweißt oder (z.B. mittels Spritzgussverfahren) monolithisch angeformt) sein, oder das Eingriffselement kann lösbar befestigt bzw. zu befestigen sein. Das Eingriffselement ist vorzugsweise dazu eingerichtet in - bezogen auf die Achse des Bedienelements - axialer oder radialer Richtung in jeweils einen Zahnzwischenraum zwischen zwei Zähnen der Zahnreihe einzugreifen, bei einem Verschwenken des Bedienelements in einen anderen Zahnzwischenraum überzutreten und bei einem derartigen Übertritt ein Geräusch zu erzeugen.

Das Eingriffselement kann beispielsweise eine Federzunge mit einem freien Ende zum Eingriff in die Zahnreihe umfassen. Die Federzunge kann aus Metall oder Kunststoff gebildet sein.

In einer vorteilhaften Variante umfasst das Eingriffselement ein Federelement mit mindestens einem nachgebenden Abschnitt, der mindestens eine Wölbung aufweist. Das Federelement greift dabei mit der Wölbung in die Zahnreihe des Bedienelements ein oder ist dazu eingerichtet, mit der Wölbung in die Zahnreihe des Bedienelements einzugreifen. So kann ein Zusammenwirken des Federelements mit der Zahnreihe des Bedienelements herbeigeführt werden.

Insbesondere ist die mindestens eine Wölbung vorzugsweise an einen Zahnzwischenraum der Zahnreihe angepasst, beispielsweise so, dass sie den Zahnzwischenraum in seiner Form zumindest in einem Abschnitt im Wesentlichen nachbildet, im Kontakt mit der Zahnreihe also im Wesentlichen entlang zweier benachbarter Flanken benachbarter Zähne verläuft.

Ein solches Federelement ist vorzugsweise in einem über die mindestens eine Wölbung hinausgehenden, beispielsweise mindestens eine doppelt so große Fläche wie die Wölbung aufweisenden Bereich des Federelements schwingfähig ausgebildet. Dadurch kann ein geeignetes, insbesondere nicht zu hochfrequentes Geräusch durch Schwingung des Federelements infolge eines Zusammenwirkens mit der Zahnreihe erzeugt werden.

Insbesondere vorteilhaft ist eine Ausführungsform eines Federelements mit mindestens einer Wölbung, das als Streifen ausgebildet ist, der in einem Bereich außerhalb der Wölbung im Wesentlichen eben ist.

Das Federelement kann beispielsweise ganz oder teilweise aus Kunststoff und/oder Metall bestehen.

Gemäß einer bevorzugten Ausführungsform umfasst das Eingriffselement eine Halterung, in der das Federelement unter Spannung gehalten wird. Die Halterung kann insbesondere eine
an ein Befestigungselement der Verstelleinrichtung angepasste Form haben, beispielsweise dazu eingerichtet sein, eine kraft- und/oder formschlüssige Verbindung mit einem solchen Befestigungsmittel einzugehen. Besonders vorteilhaft ist eine Ausführungsform, bei der die Halterung einen Resonanzkörper für das Federelement bildet; insbesondere kann die Halterung einen Hohlkörper bilden. Die Halterung kann ganz oder teilweise aus Kunststoff und/oder Metall gebildet sein. Insbesondere kann sie aus einem anderen Material bestehen als das Federelement.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:
- Figur 1:: eine erfindungsgemäße Verstelleinrichtung gemäß einer exemplarischen Ausführungsform der vorliegenden Erfindung;
- Figur 2:: ein Bedienelement gemäß einer Ausführungsform der vorliegenden Erfindung im Zusammenwirken mit einem exemplarischen Eingriffselement einer ersten Ausführungsform; und
- Figur 3:: ein Federelement einer zweiten erfindungsgemäßen Ausführungsform.

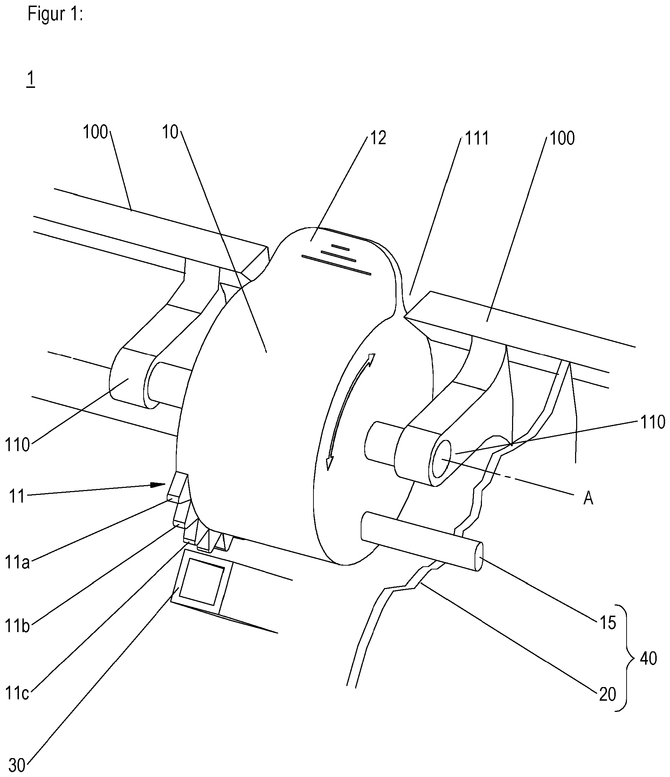

In Figur 1 ist in perspektivischer, schematischer Darstellung ein Einblick in eine exemplarische Ausführungsform einer erfindungsgemäßen Verstelleinrichtung für ein Haushaltskleingerät mit Elektromotor gezeigt. Ein derartiges Haushaltskleingerät kann beispielsweise insbesondere ein Handrührgerät, ein Standmixer, ein Mikrowellengerät, ein Elektromesser, eine Saftpresse oder dergleichen sein. Vorzugsweise hat es ein Gewicht von maximal 15 kg, bevorzugter von höchstens 8kg oder sogar höchstens 5kg. Die Verstelleinrichtung umfasst ein Bedienelement 10, das - wie durch den Doppelpfeil angegeben, mittels Lagerungen 110 um eine Achse A verschwenkbar gelagert ist; ein entsprechender Winkelbereich, in dem die Verschwenkung möglich ist, ist durch einen Griffabschnitt 12 des Bedienelements und eine (nur in einem Abschnitt gezeigte) Öffnung 111 eines Gehäuseelements 100 beschränkt, das der Griffabschnitt 12 durchstößt; die Öffnung erstreckt sich in eine Abdeckung hinein, die nicht dargestellt ist, um den vorgesehenen Einblick in das Haushaltskleingerät zu ermöglichen.

Die Verstelleinrichtung weist einen Rastmechanismus 40 zum lösbaren Halten des Bedienelements in einer jeweiligen Schwenkstellung auf, der im gezeigten Beispiel durch einen Steg 15 am Bedienelement 10 und ein Rastprofil 20 mit Zacken gebildet ist, das an dem Gehäuseelement 100 fixiert ist. Der Steg 15 des Bedienelements 10 greift in das Rastprofil 20 ein und wird durch dessen Zacken in einer jeweiligen Lage gehalten, bis von einem Verwender eine zum Verschwenken notwendige Kraft einer Mindeststärke aufgebracht wird. In diesem Fall rutscht der Steg 15 in dem Rastprofil entsprechend weiter.

Das Bedienelement 10 weist zudem eine Zahnreihe 11 mit Zähnen auf, von denen in der Figur 1 der Übersichtlichkeit halber nur die Zähne 11a, 11b, 11c mit Bezugszeichen versehen sind. Bezogen auf die Achse A bilden die Zähne 11a, 11b, 11c jeweils einen Vorsprung des Bedienelements 10 in radialer Richtung aus. Damit ist die Zahnreihe 11 dazu eingerichtet, mit einem nicht dargestellten, optional vorhandenen ortsfesten (z.B. relativ zum Gehäuseelement 100 unbeweglich angeordneten, insbesondere an diesem oder einem Rahmenelement des Haushaltskleingeräts fixierten) Eingriffselement zusammenzuwirken: Ein derartiges Eingriffselement kann dabei in mindestens einen von einer Verschwenkstellung des Bedienelements abhängigen Zahnzwischenraum eingreifen. Ein Verschwenken des Bedienelements bewirkt dann also, dass eine Position eines derartigen Eingriffselements von einem ersten Zahnzwischenraum in einen zweiten Zahnzwischenraum wechselt. Dabei wird vorzugsweise ein Geräusch erzeugt, der einem Verwender eine akustische Rückmeldung über das Verschwenken liefert.

Die in der Figur 1 gezeigte Verstelleinrichtung umfasst ferner ein Befestigungselement 30, das im dargestellten Ausführungsbeispiel als quaderförmige Aufnahme ausgebildet ist, in die ein Ende eines geeigneten Eingriffselements zur Befestigung teilweise eingeschoben werden kann; gemäß einer vorteilhaften Ausführungsform umfasst die Verstelleinrichtung dem Befestigungselement 30 gegenüber ein analoges (nicht gezeigtes) weiteres Befestigungselement, in das ein zweites Ende eines derartigen Eingriffselement eingesetzt werden kann, so dass dieses dann an beiden Enden befestigt ist. Im dargestellten Zustand ist das Befestigungselement 30 nicht bestückt, haltert also kein Eingriffselement. In diesem unbestückten Zustand läuft die Zahnreihe 11 des Bedienelements 10 frei, hat also in keiner möglichen Schwenkstellung Kontakt zu einem anderen Element der Verstelleinrichtung.

Das Befestigungselement ermöglicht somit eine optionale Aufrüstung der Verstelleinrichtung bzw. des Haushaltskleingeräts mit einem Eingriffselement und damit mit einer verbesserten Kontrollfunktionalität für ein Ausmaß einer Verschwenkung des Bedienelements 10. Zudem ermöglicht es einen einfachen Austausch eines derartigen Eingriffselements.

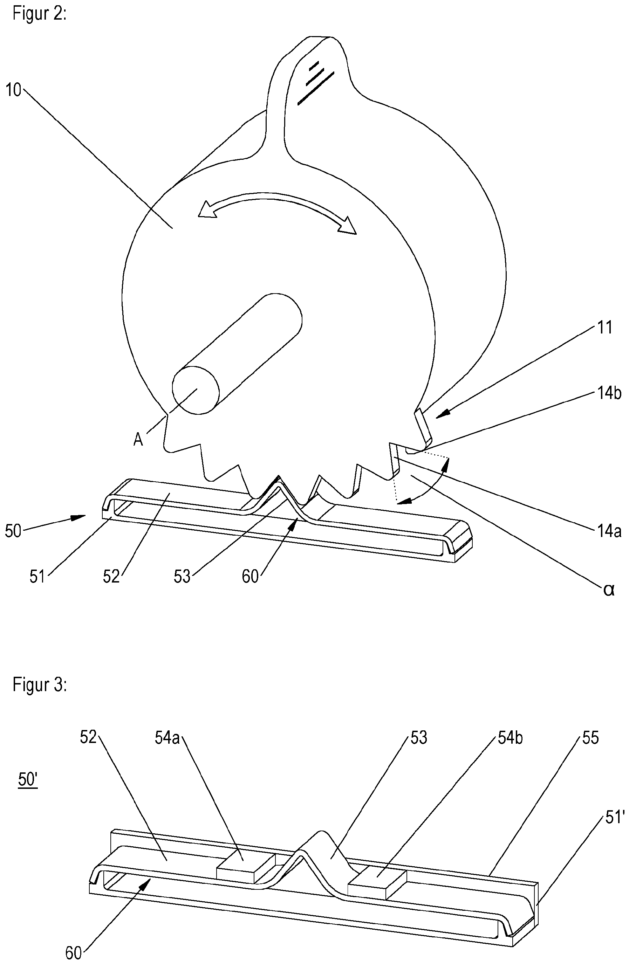

In Figur 2 ist schematisch gezeigt, wie eine Zahnreihe 11 eines Bedienelements und ein Eingriffselement 50, das in diesem Falle ein Federelement 52 umfasst, zusammenwirken. Ein derartiges Eingriffselement eignet sich beispielsweise zum Einsetzen in eine in Figur 1 gezeigte Aufnahme 30 der Verstelleinrichtung. Das Federelement 52, das beispielsweise aus Metall und/oder Kunststoff hergestellt sein kann, ist als Streifen ausgebildet, dessen Enden an einer Halterung 51 befestigt sind. Zwischen den entsprechenden Befestigungspunkten umfasst das Federelement einen nachgebenden Abschnitt, der eine Wölbung 53 aufweist. Die Wölbung 53 ist im dargestellten Ausführungsbeispiel in einem Bereich ihres Maximums (das zwischen den die Wölbung ausbildenden Flanken ausgebildet ist) entsprechend einem Zahnzwischenraum der Zahnreihe 11 des Bedienelements 10 geformt, in den es eingreift: Die Zahnzwischenräume sind dabei jeweils durch eine benachbarte Flanken 14a, 14b benachbarter Zähne der Zahnreihe gebildet, die einen Winkel α einschließen. Gemäß vorteilhaften Ausführungsformen beträgt der Winkel α mindestens 50°, bevorzugter mindestens 55° und/oder höchstens 75°, bevorzugter höchstens 60°.

In einer Umgebung der Wölbung 53 des Federelements 52 (in der Figur 2 rechts und links der Wölbung) ist das Federelement 52 im Wesentlichen eben ausgebildet. Dadurch kommen jeweils nur zwei benachbarte Zähne der Zahnreihe 11 mit dem Federelement in Kontakt, was einen geringen Widerstand beim Verschwenken sicherstellt. Wölbung und ebene Umgebung des Federelements geben auf Druck nach, sind also federnd bzw. flexibel, und zwischen dem Federelement 52 und der Halterung 51 ist ein Luftraum ausgebildet. Das Federelement kann dadurch in diesem Bereich schwingen und ein Geräusch erzeugen, wenn das Bedienelement 10 verschwenkt wird und die Wölbung dabei von einem Zahnzwischenraum in einen anderen wandert. Die Halterung 51 bildet dabei einen Resonanzboden.

In Figur 3 ist ein alternatives, aber ähnlich dem Eingriffselement 50 aufgebautes Eingriffselement 50' gemäß einer exemplarischen Ausführungsform der vorliegenden Erfindung gezeigt. Im Unterschied zum Eingriffselement 50 weist die Halterung 51' des Eingriffselements 50' eine Längswand 55 auf; an der Längswand 55 befestigt sind Haltestege 54a, 54b, zwischen denen die Wölbung 53 des Federelements hervorragt. Die Stege ermöglichen vorteilhaft eine Fixierung des Federelements und eine kontrolliertes Nachgeben der Wölbung, wenn eine Zahnreihe 11 eines Bedienelements 10 darüber verschwenkt wird.

Vorzugsweise ist der Längswand 55 gegenüber eine weitere (in Figur 3 nicht gezeigte) Längswand der Halterung 51' angeordnet, so dass das die Halterung 51' und das Federelement 52 umfassende Eingriffselement einen im Wesentlichen geschlossenen, quaderartigen Block bildet, in dessen Innerem ein Luftraum 60 ausgebildet ist. Ein derartiges Eingriffselement ist besonders gut in einem als Aufnahme ausgebildeten Befestigungselement zu befestigen und bildet zudem einen Resonanzkörper aus, der ein durch ein Verschwenken des Bedienelements erzeugtes Geräusch vorteilhaft verstärkt.

***Bezugszeichen***
- 1: Verstelleinrichtung
- 10: Bedienelement
- 11: Zahnreihe
- 11a, 11b, 11c: Zahn
- 12: Griffabschnitt
- 14a, 14b: Flanke eines Zahns
- 15: Steg
- 20: Rastelement
- 30: Befestigungsmittel
- 40: Rastmechanismus
- 50, 50: Eingriffselement
- 51,51: Halterung
- 52: Federelement
- 53: Wölbung
- 54a, 54b: Haltesteg
- 55: Längswand
- 100: Gehäuseelement
- 110: Lagerung
- 111: Öffnung

- A: Achse

## Patentansprüche

1. Verstelleinrichtung (1) für ein Haushaltskleingerät mit Elektromotor, die ein Bedienelement (10) umfasst, das zur Einstellung je einer von mindestens zwei einstellbaren Schwenkstellungen verschwenkbar gelagert ist,
wobei die Verstelleinrichtung einen Rastmechanismus (40) zum lösbaren Halten des Bedienelements in einer jeweiligen Schwenkstellung aufweist,
wobei das Bedienelement eine Zahnreihe (11) aufweist, die eine Mehrzahl an in Verschwenkrichtung des Bedienelements hintereinander angeordneten Zähnen (11a, 11b, 11c) umfasst und dazu eingerichtet ist, mit einem ortsfesten Eingriffselement (50, 50') zusammenzuwirken, wobei die Verstelleinrichtung des Weiteren mindestens ein Befestigungsmittel (30) aufweist, **dadurch gekennzeichnet, dass** das Befestigungsmittel (30) dazu eingerichtet ist, das Eingriffselement (50, 50') zum Wirkeingriff in die Zahnreihe (11) zu haltern.

2. Verstelleinrichtung gemäß Anspruch 1, wobei das mindestens eine Befestigungsmittel (30) mindestens einen Aufnahmerahmen, mindestens eine Halteschiene, mindestens eine Klemmvorrichtung und/oder mindestens ein Schraubelement umfasst.

3. Verstelleinrichtung gemäß einem der vorhergehenden Ansprüche, die zudem das Eingriffselement (50, 50') umfasst, das ortsfest an dem Haushaltskleingerät angeordnet oder anzuordnen sowie dazu eingerichtet ist, in die Zahnreihe (11) des Bedienelements (10) verstellbar einzugreifen.

4. Verstelleinrichtung gemäß Anspruch 3, wobei das Eingriffselement eine Federzunge mit einem freien Ende zum Eingriff in die Zahnreihe (11) umfasst.

5. Verstelleinrichtung gemäß einem der Ansprüche 3 oder 4, wobei das Eingriffselement (50, 50') ein Federelement (52) mit mindestens einem nachgebenden Abschnitt umfasst, der mindestens eine Wölbung (53) aufweist, und wobei das Federelement mit der mindestens einen Wölbung in die Zahnreihe (11) des Bedienelements (10) eingreift oder dazu eingerichtet ist, mit der Wölbung in das Zahnreihe des Bedienelements einzugreifen.

6. Verstelleinrichtung gemäß Anspruch 5, wobei das Federelement als Streifen ausgebildet ist, der in einer Umgebung der mindestens eine Wölbung im Wesentlichen eben ist.

7. Verstelleinrichtung gemäß Anspruch 5 oder 6, wobei das Eingriffselement eine Halterung (51, 51') umfasst, in der das Federelement unter Spannung gehalten wird.

8. Haushaltskleingerät mit Elektromotor, das eine Verstelleinrichtung (1) gemäß einem der vorhergehenden Ansprüche umfasst.

## Claims

1. Adjusting device (1) for a small household appliance with an electric motor, comprising a control element (10) which is mounted pivotably for setting each one of at least two settable pivot positions,
wherein the adjusting device has a latching mechanism (40) for retaining the control element releasably in a respective pivot position,
wherein the control element has a row of teeth (11), which comprises a plurality of teeth (11a, 11b, 11c) arranged one behind the other in the pivot direction of the control element and is configured to interact with an engaging element (50, 50') in a fixed position, wherein the adjusting device further has at least one fastening means (30), **characterised in that** the fastening means (30) is configured to retain the engaging element (50, 50') such that it engages into the row of teeth (11).

2. Adjusting device according to claim 1, wherein the at least one fastening means (30) comprises at least one receiving frame, at least one holding rail, at least one clamping apparatus and/or at least one screw element.

3. Adjusting device according to one of the preceding claims, additionally comprising the engaging element (50, 50') which is or is designed to be arranged in a fixed position on the small household appliance and is configured to engage in an adjustable manner into the row of teeth (11) of the control element (10).

4. Adjusting device according to claim 3, wherein the engaging element comprises a spring tab with one free end for engaging into the row of teeth (11).

5. Adjusting device according to one of claims 3 or 4, wherein the engaging element (50, 50') has a spring element (52) with at least one yielding section, which has at least one curvature (53), and wherein the spring element engages with the at least one curvature (53) into the row of teeth (11) of the control element (10) or is configured to engage with the curvature into the row of teeth of the control element.

6. Adjusting device according to claim 5, wherein the spring element is embodied as a strip which is essentially flat in a surrounding area of the at least one curvature.

7. Adjusting device according to claim 5 or 6, wherein the engaging element comprises a retainer (51, 51') in which the spring element is retained under tension.

8. Small household appliance with an electric motor comprising an adjusting device (1) according to one of the preceding claims.

## Revendications

1. Dispositif de réglage (1) pour un petit appareil ménager comprenant un moteur électrique, qui comprend un élément de commande (10), qui est monté de façon pivotante pour régler chacune d'au moins deux positions de pivotement réglables, dans lequel le dispositif de réglage comprend un mécanisme d'encliquetage (40) pour maintenir de façon amovible l'élément de commande dans une position de pivotement respective,
dans lequel l'élément de commande comprend une rangée de dents (11), qui comprend une pluralité de dents (11a, 11b, 11c) disposées l'une derrière l'autre dans la direction de pivotement de l'élément de commande et est configurée pour interagir avec un élément de prise (50, 50') fixe, dans lequel le dispositif de réglage comprend en outre au moins un moyen de fixation (30),
**caractérisé en ce que** le moyen de fixation (30) est configuré pour maintenir l'élément de prise (50, 50') en prise active dans la rangée de dents (11).

2. Dispositif de réglage selon la revendication 1, dans lequel l'au moins un moyen de fixation (30) comprend au moins un cadre de réception, au moins un rail de maintien, au moins un moyen de serrage et/ou au moins un élément fileté.

3. Dispositif de réglage selon l'une des revendications précédentes, qui comprend en outre l'élément de prise (50, 50'), qui est disposé ou à disposer de façon fixe sur le petit appareil ménager et qui est configuré pour engrener de façon réglable dans la rangée de dents (11) de l'élément de commande (10).

4. Dispositif de réglage selon la revendication 3, dans lequel l'élément de prise comprend une languette élastique comportant une extrémité libre pour engrener dans la rangée de dents (11).

5. Dispositif de réglage selon l'une des revendications 3 ou 4, dans lequel l'élément de prise (50, 50') comprend un élément de ressort (52) comportant au moins une partie flexible, qui comprend au moins un renflement (53), et dans lequel l'élément de ressort engrène avec l'au moins un renflement dans la rangée de dents (11) de l'élément de commande (10) ou est configuré pour engrener avec le renflement dans la rangée de dents de l'élément de commande.

6. Dispositif de réglage selon la revendication 5, dans lequel l'élément de ressort est configuré sous forme de lamelle, qui est essentiellement plane dans le pourtour du au moins un renflement.

7. Dispositif de réglage selon la revendication 5 ou 6, dans lequel l'élément de prise comprend un support (51, 51'), dans lequel l'élément de ressort est maintenu sous tension.

8. Petit appareil ménager comprenant un moteur électrique, qui comprend un dispositif de réglage (1) selon l'une des revendications précédentes.
